# EUROPEAN PATENT SPECIFICATION

(11) **EP 3 940 435 B1**
(45) Date of publication and mention of the grant of the patent: **07.02.2024**
(21) Application number: 21182291.1
(22) Date of filing: 29.06.2021
(51) Int. Cl.: G02B 5/20, G02B 5/26, C01D 17/00, C01G 41/02

(54) **OPTICAL FILM AND METHOD OF PRODUCING THE SAME**
OPTISCHER FILM UND METHODE ZUR HERSTELLUNG
FILM OPTIQUE ET SON PROCÉDÉ DE PRODUCTION

(30) Priority: 15.07.2020 JP 2020121550
(43) Date of publication of application: 19.01.2022
(73) Proprietor: SUMITOMO METAL MINING CO., LTD., Tokyo 105-8716 (JP)
(72) Inventor: OKAMI, Hideharu, Tokyo, 105-8716 (JP)
(74) Representative: TBK

(56) References cited:
- WO-A1-2019/058737
- WO-A1-2019/216134
- WO-A1-2021/033425
- WO-A1-2021/106254
- JP-A- 2020 002 459

## Description

### BACKGROUND OF THE INVENTION

### 1. Field of the Invention

The present invention relates to an optical film which has transmissivity in a visible wavelength band and reflectivity in a near-infrared wavelength band and also has radio wave transparency, and a method of producing the same, and particularly to improvements in an optical film formed by a sputtering method and a method of producing the same.

### 2. Description of the Related Art

In these years, in order to reduce the amounts of energy consumed by air conditioners inside rooms or travel means such as cars in summer, development of the heat ray shielding technology for window members through which to take in outside light has been underway. As means for this technology, a method that attaches a film (light shielding member) in which a colored film or an optical film having a heat ray shielding effect to a window, a method that applies a substance having heat ray shielding effects to a window, a method that employs a window member in which an optical film having a heat ray shielding effect is formed by a sputtering method, and the like have been known.

For example, as the above light shielding member, Patent document 1 describes a film (light shielding member) having a mirror surface state in which a metal film of aluminum or the like is formed by an evaporation method. However, in a case where such a light shielding member is used, since the exterior appearance is in a half-mirror form, reflected light is too bright in outdoor use, leading to a problem in terms of appearance. In addition, since a metal film of aluminum or the like has a high conductivity, the metal film reflects radio waves (that is, hinders the radio wave transparency), leading to a problem that it becomes difficult for devices which utilize radio waves, such as cell phones, smartphones, and devices using GPS (Global Positioning System) to catch radio waves.

In addition, as the above method that applies a substance having a heat ray shielding effect, the present applicant has proposed an infrared ray shielding fine particle dispersed body containing composite tungsten oxide fine particles, which is described in Patent document 2. The composite tungsten oxide fine particles efficiently absorb rays of the sun, particularly light in the near-infrared region, and also have a high transparency to visible light. The above infrared ray shielding fine particle dispersed body is formed by dispersing the composite tungsten oxide fine particles into an appropriate solvent to obtain a dispersion liquid, adding a medium resin to the obtained dispersion liquid, and then coating a surface of a base material to form a thin film, and has both heat ray shielding ability and radio wave transparency. However, the method described in Patent document 2 has a problem that since the composite tungsten oxide fine particles shield heat ray by absorbing light in the near-infrared region, the light absorbed in the composite tungsten oxide fine particles is converted into heat, thus heating the base material. Moreover, there is a problem that since the thin film is formed by the application (coating) method, a sophisticated application technique is required in order to secure the control of the film thickness, the uniformity in film thickness across a large area, and the flatness.

In addition, in the above-described method that uses a window member in which an optical film having a heat ray shielding effect is formed by the sputtering method, if the optical film contains a metal layer, it hinders the radio wave transparency. For this reason, only transparent dielectric substances (SiO₂, MgF₂, ZrO₂, TiO₂, Ta₂O₅, Nb₂O₅, and the like) are used, and a multi-layer film having transmissivity in the visible wavelength band, shielding ability in the near-infrared wavelength band, and radio wave transparency can be designed by repeatedly laminating a high refractive index film (TiO₂, Ta₂O₅, Nb₂O₅) and a low refractive index film (SiO₂, MgF₂, ZrO₂). However, achieving this requires at least several tens to 100 film layers and precise control of film thickness. For example, Patent document 3 discloses a technique relating to an infrared cut filter for a digital still camera. However, it is difficult to employ the method of Patent document 3 for window members, which even are not optical components forming expensive optical devices, in terms of costs.

Note that it is possible to significantly reduce the number of film layers by employing a multi-layer film having optical constants in which the extinction coefficient in the visible wavelength band is small and the extinction coefficient in the near-infrared wavelength band is large instead of the above multi-layer film formed by repeatedly laminating the high refractive index film (TiO₂, Ta₂O₅, or the like) and the low refractive index film (SiO₂, MgF₂, or the like). However, in a case where the multi-layer film having optical constants in which the extinction coefficient in the near-infrared wavelength band is large is employed, there is concern that the base material (for example, glass) is heated by heat rays absorbed by the multi-layer film to cause heat cracks of the base material.

For this reason, it is desired to develop a half-reflective heat ray shielding film that has transmissivity in the visible wavelength band and radio wave transparency as well as reduced absorbance in the near-infrared wavelength band.

### CONVENTIONAL ART DOCUMENTS

### PATENT DOCUMENTS

Patent Document 1: Japanese Patent Application Publication No. Hei 5-113085
Patent Document 2: Japanese Patent No. 4096205
Patent Document 3: Japanese Patent Application Publication No. 2016-070965

EP 3 812 480 A1 relates to a composite tungsten oxide film comprising a composition represented by a general formula MxWyOz (wherein, an element M is one or more elements selected from alkaline metal, alkaline earth metal, Fe, In, Tl, and Sn, an element W is tungsten, and an element O is oxygen) as main components, wherein 0.001 ≦x/y≦1, 2.2≦z/y≦3.0, organic components are not contained substantially, a transmittance in a wavelength of 550 nm is 50% or more, a transmittance in a wavelength of 1400 nm is 30% or less, and also, a reflectance in a wavelength of 1400 nm is 35% or more.

WO2019/216134 A1 relates to a composite tungsten oxide film of which the main component has a chemical composition represented by the general formula: MxWyOz (wherein M represents at least one element selected from an alkali metal, an alkaline earth metal, Fe, In, Tl and Sn; W represents tungsten; and O represents oxygen), wherein the formulae: 0.001 ≤ x/y ≤ 1 and 2.2 ≤ z/y ≤ 3.0 are satisfied, substantially no organic substance component is contained, the sheet resistance is 105 Ω/□ or more, the permeability at a wavelength of 550 nm is 50% or more, the permeability at a wavelength of 1400 nm is 30% or less, the absorptance at a wavelength of 1400 nm is 35% or more, and the absorptance at a wavelength of 800 nm relative to the absorptance at a wavelength of 1400 nm is 80% or less.

WO2019/058737 A1 relates to a cesium tungsten oxide film comprising cesium, tungsten, and oxygen as the main components, wherein when the atomic ratio of cesium and tungsten is Cs/W, Cs/W is 0.1 to 0.5, and the film has a hexagonal crystal structure, and to a method for its manufacturing comprising: a film-forming step in which a film is formed using a cesium tungsten oxide target; and a heat treatment step in which the film is heat treated at a temperature of at least 400°C to less than 1000°C, wherein either the film-forming step or the heat treatment step is carried out in an oxygen-containing atmosphere.

### SUMMARY OF THE INVENTION

The present invention has been made in consideration of such problems, and aims to provide a half-reflective optical film that has both transmissivity in the visible wavelength band and radio wave transparency as well as reduced absorbance in the near-infrared wavelength band, and a method of producing the same.

In view of this, the present inventors earnestly studied and consequently found that it is possible to achieve a half-reflective heat ray shielding film that has radio wave transparency and optical transmissivity in the visible wavelength band as well as reduced absorbance in the near-infrared wavelength band in a case where an optical film to be formed on a base material is composed of a cesium tungsten composite oxide and a refractive index n and an extinction coefficient k at least on a surface side of the optical film are set to specific numerical ranges (the extinction coefficient k in the near-infrared wavelength band is large).

The present invention has been completed with such technical finding.

Specifically, the present invention is defined by the appended claims.

The optical film according to the present invention makes it possible to obtain a half-reflective heat ray shielding film that has radio wave transparency and optical transmissivity in the visible wavelength band as well as reduced absorbance in the near-infrared wavelength band because the refractive index n and the extinction coefficient k at least on the surface side are each set within the numerical ranges in Table 12 defined by claim 1.

Hence, the optical film according to the present invention has an effect of preventing heat cracks and the like of the base material on which the optical film is formed.

### BRIEF DESCRIPTION OF THE DRAWINGS

FIG. 1 is a configuration explanatory diagram of an optical film according to the present invention.
FIG. 2 is a graph showing a spectro-optical property (wavelength and transmittance) of an optical film according to Example 5.
FIG. 3 is a graph showing a spectro-optical property (wavelength and reflectance) of the optical film according to Example 5.
FIG. 4 is a graph showing a spectro-optical property (wavelength and reflectance) of an optical film according to Comparative Example 5.
FIG. 5 includes Part (A) which is an explanatory diagram of a cesium tungsten composite oxide film formed on a base material in a film forming step of a production method according to the present invention, and Part (B) which is an explanatory diagram of a surface layer and an internal layer formed in a cesium tungsten composite oxide film in an annealing step of the production method according to the present invention.
FIG. 6 is a schematic perspective view of a flat plate-shaped target.
FIG. 7 is a schematic perspective view of a cylindrical target (rotary target).
FIG. 8 is a configuration explanatory diagram of a sputtering apparatus including a flat plate-shaped target.
FIG. 9 is an explanatory diagram showing an arrangement relation between a base material, which is a film formation subject, and a rotary target.
FIG. 10 is a configuration explanatory diagram of a sputtering film formation unit A.
FIG. 11 is an explanatory diagram showing an arrangement relation between a base material and a rotary target according to a dual-sputtering method.
FIG. 12 is a configuration explanatory diagram of a sputtering film formation unit B according to the dual-sputtering method.
FIG. 13 is a configuration explanatory diagram of a sputtering film formation unit C according to the dual-sputtering method.
FIG. 14 is a graph showing spectro-optical properties (wavelength and transmittance) of optical films according to Examples 4 to 6 and Comparative Example 5.
FIG. 15 is a graph showing spectro-optical properties (wavelength and reflectance) of optical films according to Examples 4 to 6 and Comparative Example 5.

### DESCRIPTION OF THE PREFERRED EMBODIMENTS

Embodiments according to the present invention is described in detail below.

The present invention uses a composite tungsten oxide film containing cesium, tungsten, and oxygen and having a heat ray shielding effect, and makes it possible to significantly reduce the number of film layers as compared with the case of using dielectric multi-layer films transparent to from the visible wavelength band to the near-infrared wavelength band.

### (1) Optical Film

An optical film according to the present invention contains cesium (alkali metal), tungsten, and oxygen.

The technique relating to infrared shielding using composite tungsten oxide particles according to the present applicant is described in detail in Patent document 2. It is necessary to use a composite tungsten oxide in this composition range as a main component in order to obtain a film that has high transparency in the visible wavelength band and absorbance in the near-infrared wavelength band. The fundamental optical properties that a composite tungsten oxide film has are derived from the atomic arrangement of a logically calculated element M (M is at least one element selected from H, He, alkali metals, alkaline earth metals, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I) and tungsten W and oxygen O. Specifically, in a case where composite tungsten oxide fine particles have a hexagonal crystal structure, the transmission in the visible light region of the fine particles is improved and absorption in the near-infrared region of the fine particles is improved. The composite tungsten oxide fine particles may be crystalline or amorphous.

In a case where composite tungsten oxide fine particles that have a hexagonal crystal structure have a uniform crystal structure, the amount of the additional element M to be added is preferably 0.2 or more and 0.5 or less, and more preferably 0.33, when the amount of tungsten is deemed as 1. It is considered that when the composite tungsten oxide is M_{0.33}WO₃, the additional elements M are arranged in all the voids of the hexagon.

By the way, there is a problem that in a case of employing a composite tungsten oxide film described in Patent document 2 that has absorbance in the near-infrared wavelength band or a multi-layer film that has optical constants in which the extinction coefficient in the near-infrared wavelength band is large, light absorbed in the film is converted into heat, thus heating the base material.

In view of this, the present invention aims at providing a half-reflective optical film that has transmissivity in the visible wavelength band and radio wave transparency as well as reduced absorbance in the near-infrared wavelength band, and a method of producing the same.

Specifically, the optical film as defined in appended claim 1 is formed on a base material and composed of: a cesium tungsten composite oxide containing cesium, tungsten, and oxygen, wherein
a refractive index n and an extinction coefficient k at least on a surface side of the optical film are each set within numerical ranges in Table 5 given below.

**[Table 5]**

| nm | n-min | n-max | nm | k-min | k-max |
|---|---|---|---|---|---|
| 300 | 2.1 | 2.6 | 300 | 1.0 | 1.5 |
| 400 | 1.9 | 2.6 | 400 | 0.0 | 0.5 |
| 600 | 1.2 | 1.6 | 600 | 0.1 | 0.5 |
| 800 | 0.7 | 1.2 | 800 | 0.7 | 1.1 |
| 1000 | 0.5 | 1.1 | 1000 | 1.3 | 1.8 |
| 1200 | 0.4 | 1.0 | 1200 | 2.0 | 2.4 |
| 1400 | 0.5 | 1.1 | 1400 | 2.6 | 3.1 |
| 1600 | 0.7 | 1.3 | 1600 | 3.2 | 3.8 |
| 1800 | 1.0 | 1.6 | 1800 | 3.6 | 4.3 |
| 2000 | 1.4 | 1.9 | 2000 | 4.0 | 4.8 |
| 2200 | 1.8 | 2.2 | 2200 | 4.3 | 5.1 |
| 2400 | 2.0 | 2.5 | 2400 | 4.5 | 5.4 |

According to the optical film of the present invention, since the refractive index n and the extinction coefficient k at least on the surface side are each set within the numerical ranges in Table 5 given above, it is possible to form a half-reflective heat ray shielding film that has radio wave transparency and optical transmissivity in the visible wavelength band as well as reduced absorbance in the near-infrared wavelength band.

### (1B) Optical Film Composed of: Surface Layer; and Internal Layer and Having Film Thickness of 300 nm to 560 nm

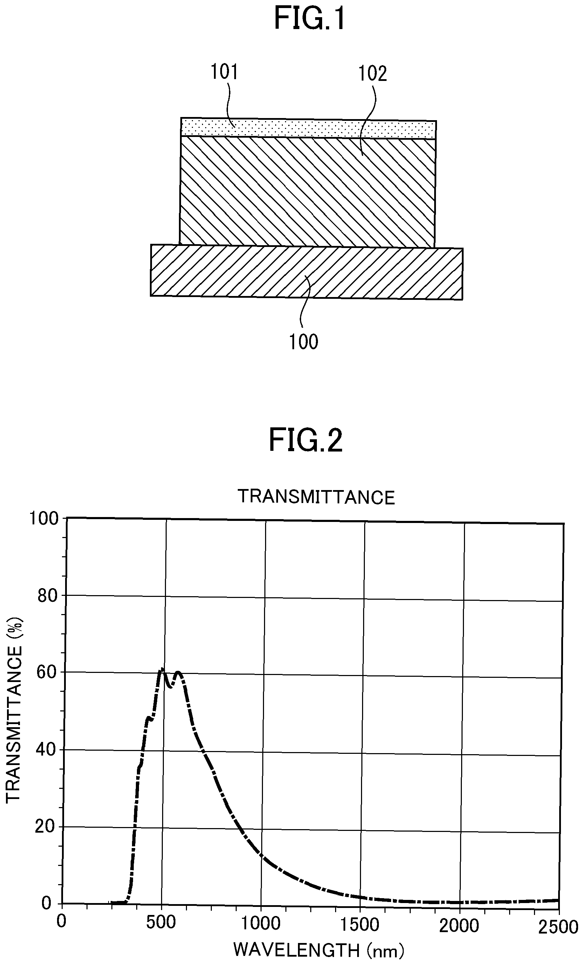

The optical film according to the present invention is composed of: a surface layer 101 which is located on the surface side and has a thickness of 20 nm to 60 nm; and an internal layer 102 which is located on the base material 100 side (see FIG. 1) and the refractive index n and the extinction coefficient k of the surface layer 101 are each set within the numerical ranges in Table 5 given above and the refractive index n and the extinction coefficient k of the internal layer 102 are each set within numerical ranges in Table 6 given below, it is possible to form a heat ray shielding film that has optical transmissivity in the visible wavelength band and in which the surface layer 101 has such a thickness that suppresses heat generation associated with absorbance in the near-infrared wavelength band and that is of a half-reflective type because part of light in the near-infrared wavelength band is reflected at an interface between the surface layer 101 and the internal layer 102. It is also possible to make the heat ray shielding film have a radio wave transparency [a sheet resistance of 10⁴ Ω/□ (ohms per square) or more].

**[Table 6]**

| nm | n-min | n-max | nm | k-min | k-max |
|---|---|---|---|---|---|
| 300 | 2.6 | 3.2 | 300 | 0.3 | 0.7 |
| 400 | 2.1 | 2.6 | 400 | 0.0 | 0.2 |
| 600 | 1.9 | 2.3 | 600 | 0.0 | 0.2 |
| 800 | 1.8 | 2.1 | 800 | 0.0 | 0.3 |
| 1000 | 1.7 | 2.1 | 1000 | 0.0 | 0.5 |
| 1200 | 1.7 | 2.1 | 1200 | 0.0 | 0.7 |
| 1400 | 1.7 | 2.2 | 1400 | 0.1 | 0.8 |
| 1600 | 1.7 | 2.3 | 1600 | 0.1 | 0.9 |
| 1800 | 1.7 | 2.4 | 1800 | 0.2 | 1.0 |
| 2000 | 1.8 | 2.6 | 2000 | 0.2 | 1.0 |
| 2200 | 1.9 | 2.7 | 2200 | 0.3 | 1.0 |
| 2400 | 1.9 | 2.8 | 2400 | 0.3 | 1.0 |

The surface layer 101 and the internal layer 102 of the optical film shown in FIG. 1 are optically different, and optical constants of the refractive index n and the extinction coefficient k according to the surface layer 101 and the internal layer 102 are different in accordance with ellipsometric analysis on the optical film in the depth direction (the refractive index n and the extinction coefficient k of the surface layer 101 are each set within the numerical ranges in Table 5 given above while the refractive index n and the extinction coefficient k of the internal layer 102 are each set within the numerical ranges in Table 6 given above).

The reason why the optical constants of the surface layer 101 and the internal layer 102 of the above optical film are different results from the method of producing an optical film according to the present invention. Specifically, this is because reduction and the like of the surface layer 101 proceeds due to annealing treatment that is conducted after the film formation of the cesium tungsten composite oxide film formed on the base material, so that the chemical state of the surface layer 101 is changed.

Then, if the time of the annealing treatment is longer, the reduction proceeds to the inside, so that the film thickness of the surface layer 101 becomes thicker. In a case where the film thickness of the surface layer 101 is less than 20 nm, the annealing treatment for obtaining the optical film according to the present invention is insufficient, and it is difficult to set the refractive index n and the extinction coefficient k of the surface layer 101 within the numerical ranges in Table 5 given above. On the other hand, if the film thickness of the surface layer 101 exceeds 60 nm, the transmittance in the visible light region decreases. For this reason, the thickness of the surface layer 101 is preferably 20 nm to 60 nm.

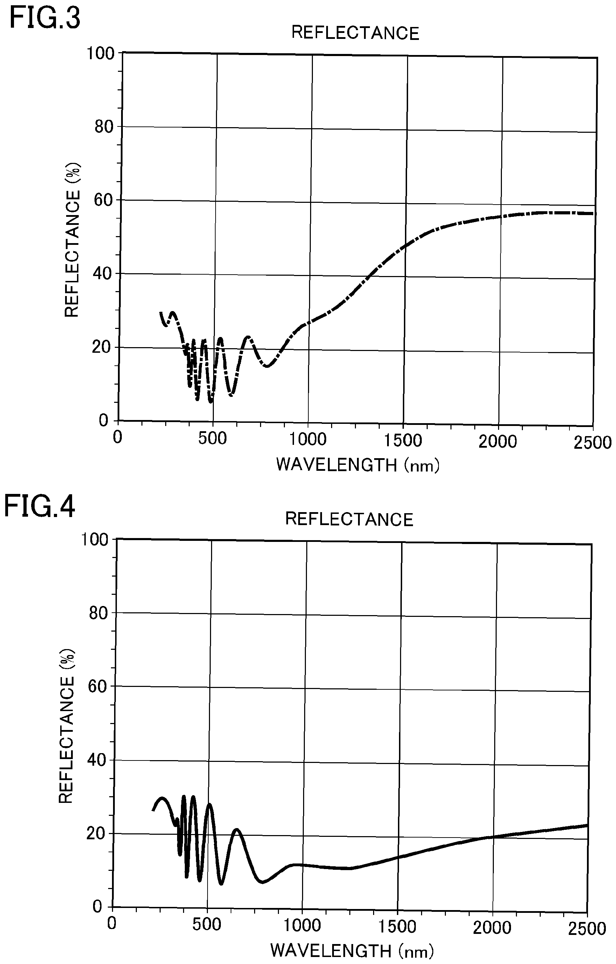

Graphs of FIG. 2 and FIG. 3 show a spectro-optical property (wavelength and transmittance) and a spectro-optical property (wavelength and reflectance) of an optical film according to Example 5 that has a film thickness of 440 nm and is composed of: a surface layer which has a thickness of 40 nm; and an internal layer which has a thickness of 400 nm. From the graphs of FIG. 2 and FIG. 3, it is confirmed that a half-reflective heat ray shielding film of which average transmittance in the region of the wavelength of 400 nm to 550 nm is 45% or more and reflectance in the wavelength of 2000 nm is 40% or more is formed.

### (1C) Method of Producing Optical Film

A method of producing an optical film composed of a surface layer and an internal layer according to the present invention comprises:
a film forming step of forming a cesium tungsten composite oxide film of which a refractive index n and an extinction coefficient k are each set within numerical ranges in Table 7 given below on a base material by using a sputtering target comprised of cesium atoms, tungsten atoms, and oxygen, conducting feedback control of an oxygen partial pressure of a sputtering film formation atmosphere, and controlling a heating temperature on the base material

**[Table 7]**

| nm | n-min | n-max | nm | k-min | k-max |
|---|---|---|---|---|---|
| 300 | 2.6 | 3.2 | 300 | 0.3 | 0.7 |
| 400 | 2.1 | 2.6 | 400 | 0.0 | 0.2 |
| 600 | 1.9 | 2.3 | 600 | 0.0 | 0.2 |
| 800 | 1.8 | 2.1 | 800 | 0.0 | 0.3 |
| 1000 | 1.7 | 2.1 | 1000 | 0.0 | 0.5 |
| 1200 | 1.7 | 2.1 | 1200 | 0.0 | 0.7 |
| 1400 | 1.7 | 2.2 | 1400 | 0.1 | 0.8 |
| 1600 | 1.7 | 2.3 | 1600 | 0.1 | 0.9 |
| 1800 | 1.7 | 2.4 | 1800 | 0.2 | 1.0 |
| 2000 | 1.8 | 2.6 | 2000 | 0.2 | 1.0 |
| 2200 | 1.9 | 2.7 | 2200 | 0.3 | 1.0 |
| 2400 | 1.9 | 2.8 | 2400 | 0.3 | 1.0 |

; and
an annealing step of conducting an annealing treatment on the formed cesium tungsten composite oxide film to form a surface layer of which a refractive index n and an extinction coefficient k are each set within numerical ranges in Table 8 given below on a surface side of the cesium tungsten composite oxide film, and to form an internal layer of which a refractive index n and an extinction coefficient k are each set within the numerical ranges in Table 7 given above in a portion on the base material side of the cesium tungsten composite oxide film except the surface layer.

**[Table 8]**

| nm | n-min | n-max | nm | k-min | k-max |
|---|---|---|---|---|---|
| 300 | 2.1 | 2.6 | 300 | 1.0 | 1.5 |
| 400 | 1.9 | 2.6 | 400 | 0.0 | 0.5 |
| 600 | 1.2 | 1.6 | 600 | 0.1 | 0.5 |
| 800 | 0.7 | 1.2 | 800 | 0.7 | 1.1 |
| 1000 | 0.5 | 1.1 | 1000 | 1.3 | 1.8 |
| 1200 | 0.4 | 1.0 | 1200 | 2.0 | 2.4 |
| 1400 | 0.5 | 1.1 | 1400 | 2.6 | 3.1 |
| 1600 | 0.7 | 1.3 | 1600 | 3.2 | 3.8 |
| 1800 | 1.0 | 1.6 | 1800 | 3.6 | 4.3 |
| 2000 | 1.4 | 1.9 | 2000 | 4.0 | 4.8 |
| 2200 | 1.8 | 2.2 | 2200 | 4.3 | 5.1 |
| 2400 | 2.0 | 2.5 | 2400 | 4.5 | 5.4 |

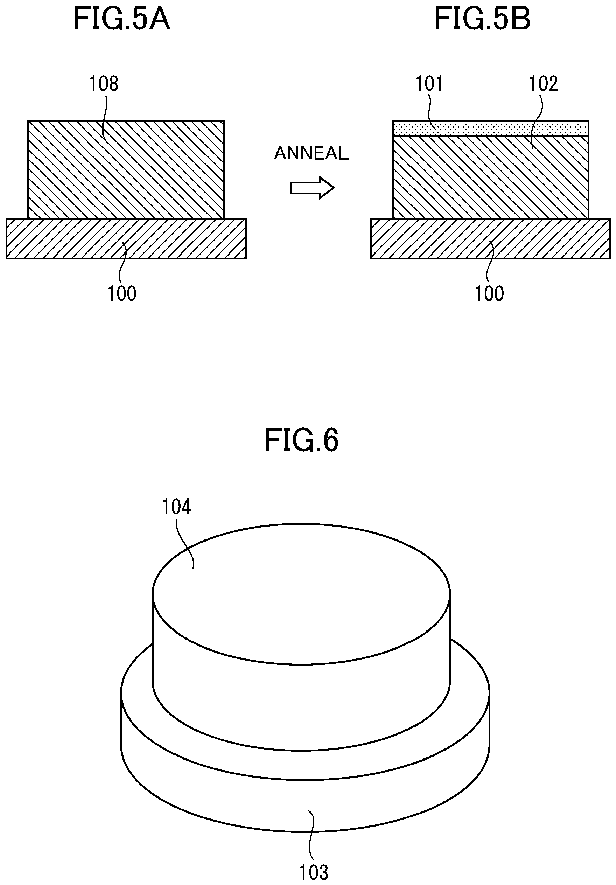

The above annealing treatment is preferably conducted at a temperature of 300°C or more under an oxygen-free atmosphere which does not contain oxygen, and it is possible to conduct the above annealing treatment using an electric furnace that allows an atmosphere and a temperature to be controlled, or the like. FIG. 5 shows steps of producing an optical film according to the present invention. In the film forming step using a sputtering apparatus, a cesium tungsten composite oxide film 108 of which a refractive index n and an extinction coefficient k are each set within the numerical ranges in Table 7 given above is formed on a base material 100 as shown in FIG. 5(A), and in the annealing step using an electric furnace or the like, a surface layer 101 of which a refractive index n and an extinction coefficient k are each set within the numerical ranges in Table 8 given above is formed on a surface side of the cesium tungsten composite oxide film 108, and an internal layer 102 of which a refractive index n and an extinction coefficient k are each set within the numerical ranges in Table 7 given above is formed in a portion on the base material 100 side of the cesium tungsten composite oxide film 108 except the surface layer 101 as shown in FIG. 5(B).

The optical constants of the cesium tungsten composite oxide film after the sputtering film formation are within the numerical ranges in Table 7 given above. In addition, as seen from the graph of FIG. 4, which shows a spectro-optical property (wavelength and reflectance) of an optical film according to Comparative Example 5, it is observed that light reflection in the near-infrared region of the cesium tungsten composite oxide film (optical film) after sputtering film formation that has no surface layer is very small, and the reflectance in a wavelength of 2000 nm is around 20%.

In addition, the optical constants (refractive index n and extinction coefficient k) of the surface layer after the annealing step are each set within the numerical ranges in Table 8 given above, and as seen from the graph of FIG. 3, which shows a spectro-optical property (wavelength and transmittance) of the optical film according to Example 5, it is observed that light reflection in the near-infrared region of the optical film that has the surface layer is significant, and the reflectance in a wavelength of 2000 nm is around 60%.

Note that in a case where in the optical film having a film thickness of 300 nm to 560 nm, the optical constants (refractive index n and extinction coefficient k) of the optical film after the sputtering film formation are each set within the numerical ranges in Table 8 given above by appropriately controlling the atmosphere, the temperature of the base material, and the like in the sputtering film formation, the annealing treatment after the film forming step is unnecessary.

### (2) Sputtering Target

It is necessary for the optical film that contains cesium, tungsten, and oxygen and of which a refractive index n and an extinction coefficient k are each set within the numerical ranges in Table 5 or Table 6 given above that the ratio between cesium atoms and tungsten atoms (Cs:W) is set within a specific range, which allows film formation by a sputtering method. Then, the sputtering target used in the film formation includes a target that contains cesium atoms and tungsten atoms (that is, a target that is composed of a mixture of a compound of cesium source and a compound of tungsten source), or may be a target composed of a cesium source and a tungsten source separately (that is, a sputtering target of cesium source and a sputtering target of tungsten source).

Hereinafter, sputtering film formation using a target that contains cesium atoms and tungsten atoms is described.

In order to obtain an optical film of which a refractive index n and a extinction coefficient k are each set within the numerical ranges in Table 5 or Table 6 given above, a sputtering target of which the ratio between cesium atoms and tungsten atoms (Cs:W) is set within a range of 1:2 to 1:4 may be used. The ratio (Cs:W) is preferably 1:2.5 to 1:4, and most preferably 1:2.8 to 1:4. Then, the ratio between cesium atoms and tungsten atoms of the sputtering target substantially matches the ratio between cesium atoms and tungsten atoms of the optical film.

In addition, even when the target itself does not contain an appropriate amount of oxygen, it is possible to adjust the amount of oxygen to be taken into a film by a reactive sputtering. Moreover, the target may contain components such as carbon that are discharged during sputtering. That is, the target does not have to be a cesium tungsten composite oxide, and may be a precursor of a cesium tungsten composite oxide that has an atomic ratio of cesium and tungsten of the optical film according to the present invention.

Moreover, in the case of forming the optical film according to the present invention by a dual-sputtering method, it is possible to attach a sputtering target serving as a cesium source or a sputtering target comprised of a compound of cesium and tungsten that contains more cesium than the optical film according to the present invention to one sputtering cathode, and attach a sputtering target serving as a tungsten source or a sputtering target comprised of a compound of cesium and tungsten that contains more tungsten than the optical film according to the present invention to the other sputtering cathode. The atomic ratio between cesium and tungsten of the optical film obtained by the dual-sputtering method may be set by adjusting an electric power to be applied to each sputtering cathode or a duty ratio.

As the above cesium source, a metal, an oxide, or a carbonate may be used. Oxides of cesium includes Cs₂O, Cs₂O₂, CsO₂, Cs₂O₃, Cs₁₁O₃, Cs₄O, and Cs₇O.

As the above tungsten source, a metal, an oxide, or a carbide may be used. As an oxide of tungsten, W₃O, WO₂, W₂₀O₅₈, or WO₃ may be used.

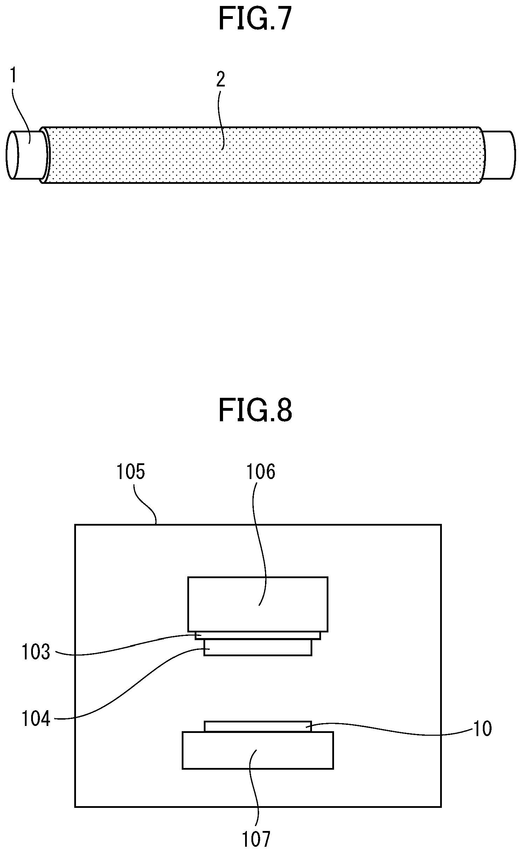

Next, the sputtering target includes a flat plate-shaped target shown in FIG. 6 and a cylinder-shaped target shown in FIG. 7. The flat plate-shaped target has a structure in which a sputtering target 104 is fixed on a surface of a backing plate 103 with a bonding material such as indium. In addition, the sputtering target 104 of the flat plate-shaped target is obtained by producing a molded body through pressurization and molding by a cold isostatic pressing method, and sintering the molded body obtained. Although the flat plate-shaped target can be produced relatively easily, there is a case where the entire surface is not sputtered, foreign matters are deposited in a non-erosion portion which has not been sputtered, and these foreign matters cause abnormal discharge. Moreover, these foreign matters attach to the products in some cases. In these years, the cylinder-shaped target (rotary target ) shown in FIG. 7 has become mainstream as a large-sized target. While the cylinder-shaped target is difficult to produce, since the entire surface is sputtered, and the cylinder-shaped target does not have such a drawback as in the flat plate-shaped target, and further can achieve use efficiency nearly 3 times that of the flat plate-shaped target.

The cylinder-shaped target (rotary target ) 2 shown in FIG. 7 is produced mainly by two methods. The first method is a method including: producing a molded body through pressurization and molding by a cold isostatic pressing method, like the flat plate-shaped target, and sintering and grinding into a cylinder the molded body obtained, and inserting the resultant into the backing tube 1 shown in FIG. 7, followed by bonding with a bonding material such as indium. The second method is a method including: thermally spraying a powder directly onto the backing tube 1.

The cylinder-shaped target (rotary target ) produced by thermal spraying is produced such that on the backing tube 1 composed of a metal such as copper or a copper alloy and having a surface roughened by blasting, a foundation layer made of an alloy selected from a nickel-aluminum alloy, a nickel-chromium alloy, a copper-aluminum alloy, a copper-zinc alloy, and the like is formed by thermal spraying, and powders (a powder of cesium source and a powder of tungsten source) are thermally sprayed directly to form a thermally sprayed film (target film) having a thickness of 5 mm to 20 mm, and thereafter the thermally sprayed film (target film) is polished and finished into a rotary target.

Here, as the thermal spraying, a plasma spraying may be used, and an AC/DC arc plasma torch, an inductive coupling plasma torch, or the like is used, and as the atmosphere during the thermal spraying, an inert gas or the like may be used.

Here, in a case where a sputtering target is produced by the thermal spraying method, it must be noted that Cs₂O of the cesium source is sometimes disproportionally reacted to Cs₂O₂ depending on the temperature, which affects the sputtering rate of the obtained target (variation in sputtering rate).

### (3) Sputtering Apparatus

By conducting reactive sputtering with oxygen using the above target, an optical film composed of CsαWβOγCδ can be obtained. α and β reflect the target composition ratio as they are, and γ can be adjusted by means of the amount of oxygen to be introduced during the reactive sputtering. Carbon C (for example, in a case where the tungsten source is composed of carbide) released from the target binds to oxygen O released from the target or oxygen O introduced for the reactive sputtering to be discharged as CO₂, and thus hardly remains in the optical film.

FIG. 8 is a configuration explanatory diagram of a sputtering apparatus (film formation apparatus) 105 including a flat plate-shaped target. Inside a film formation chamber, a base material holding member 107 is arranged to face a magnetron sputtering cathode 106. The sputtering target 104 is attached to the sputtering cathode 106, and the base material holding member 107 holds a base material 10 which is subjected to sputtering film formation. The base material holding member 107 may include a heater. As the heater (not shown), a near-infrared heater, a carbon heater, a sheath heater, or the like can be used. To the sputtering cathode 106, a power supply is connected. Note that for a non-conductive target, it is difficult to conduct sputtering utilizing a direct-current power supply. For this reason, a medium-frequency power supply (20 kHz to 200 kHz) is connected. Moreover, a normal pulsed power supply and a high-voltage pulsed power supply (HiPMS) can be utilized.

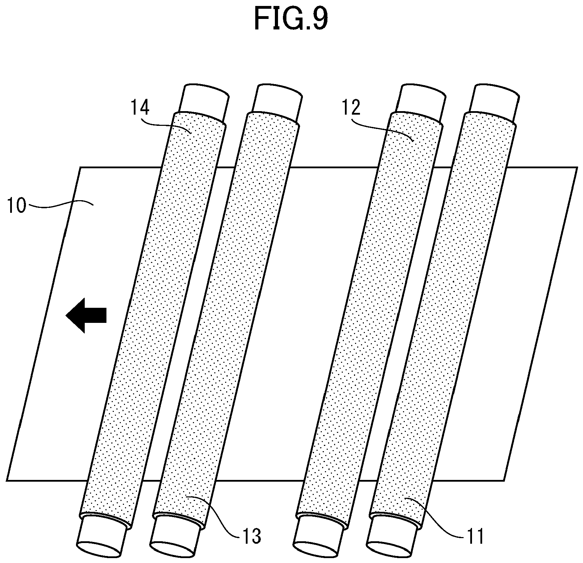

FIG. 9 is an explanatory diagram showing a film forming method using a cylinder-shaped target (rotary target ), that is, an arrangement relation between a base material and a rotary target. As this film forming method, a dual magnetron sputtering method that utilizes a medium-frequency power supply (20 kHz to 200 kHz) to alternately apply an electric power to two rotary targets 11, 12, 13, 14 arranged parallel to a base material 10, which moves in the direction of the arrow. Moreover, a normal pulsed power supply and a high-voltage pulsed power supply (HiPMS) can be utilized.

A sputtering apparatus using the dual magnetron sputtering method is described below.

### (3A) Sputtering Film Formation Unit A and Film Forming Method

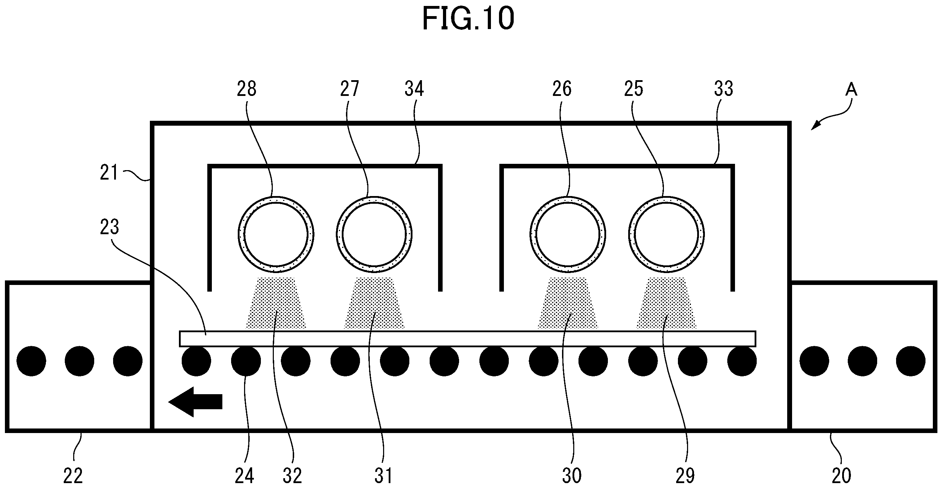

The sputtering film formation unit A which forms a film by the dual magnetron sputtering method includes: connection chambers 20, 22 and a film formation chamber 21 as shown in FIG. 10. Inside these connection chambers 20, 22 and film formation chamber 21, transfer rollers 24 which transfer the base material 23 are successively arranged. Inside the film formation chamber 21, dual magnetron cathode units 33, 34 which maintain film formation gas pressure are provided. Note that the base material 23 is heated to 400°C or more in the connection chamber 20 in advance. The base material 23, which is a film formation subject, is heated by heating the connection chamber 20. As the heater for the connection chamber 20, a near-infrared heater, a carbon heater, a sheath heater, or the like can be used. In addition, the base material 23 can be supplied into the connection chamber 20 from a base material storage (not shown). Moreover, it is desirable to dispose a pre-treatment chamber (not shown) between the connection chamber 20 and the base material storage to treat (clean, etch) the surface of the base material 23 with a plasma, an ion beam, or the like.

In addition, in the above dual magnetron cathode units 33, 34, rotary magnetron cathodes (not shown) to which a pair of rotary targets 25, 26, 27, 28 are respectively attached are arranged, and the rotary targets 25, 26 and the rotary targets 27, 28 are each connected to the medium-frequency power supply such that the electric power is alternately applied thereto. Specifically, it is possible to conduct dual magnetron sputtering in which the electric power is alternately applied, using a power supply of 20 kHz to 200 kHz as the medium-frequency power supply. Moreover, a normal pulsed power supply or a high-voltage pulsed power supply (HiPMS) can also be utilized. In addition, in the rotary magnetron cathodes, which are not shown, magnets (not shown) that generate sputtering regions 29, 30, 31, 32 only on the base material 23 side of the rotary targets 25, 26, 27, 28 are arranged, which cause most of the target particles from the rotary targets 25, 26, 27, 28 to fly in the direction toward the base material 23, so that the attachment efficiency is around 90%.

The oxygen gas for conducting the reactive sputtering is introduced into each of the dual magnetron cathode units 33, 34. To control the amount of oxygen to be introduced into the dual magnetron cathode units 33, 34, for example, a control "impedance control" that sets the impedance change of the sputtering power supply to a set value or a plasma emission monitor (PEM) control that controls a plasma emission intensity of a specific wavelength to a set value may be employed.

Then, the sputtering film formation unit A shown in FIG. 10 in which two pairs of dual magnetron cathode units 33, 34 are arranged in the film formation chamber 21 is capable of forming two types of optical films at maximum. In a case where the same rotary target is incorporated in each of the two pairs of dual magnetron cathode units 33, 34, it becomes possible to form one type of optical films in two-fold film thickness.

Next, in the film forming method in accordance with the dual-sputtering method, a sputtering target that serves as the cesium source and a sputtering target that serves as the tungsten source are prepared, and each sputtering target is attached to different rotary magnetron cathodes to conduct sputtering.

A CsxWyOz film can be obtained by conducting the reactive sputtering with oxygen. For x and y, the sputtering rates of the sputtering target that serves as the cesium source and the sputtering target that serves as the tungsten source need to be adjusted.

There are several methods for adjusting the sputtering rates by attaching the sputtering target that serves as the cesium source and the sputtering target that serves as the tungsten source to different rotary magnetron cathodes.
(i) An adjustment method including: connecting individual pulsed power supplies to both rotary magnetron cathodes; and simultaneously applying sputtering electric powers having the same pulse time and different peak powers for both rotary magnetron cathodes.
(ii) An adjustment method including: connecting a single dual magnetron power supply to both rotary magnetron cathodes; and alternately applying sputtering electric powers having the same peak power and different duty ratios to both rotary magnetron cathodes.
(iii) It is possible to adjust both target composition ratios by the above (i) or (ii).

In addition, z in the CsxWyOz film can be adjusted by means of the amount of oxygen to be introduced during the reactive sputtering.

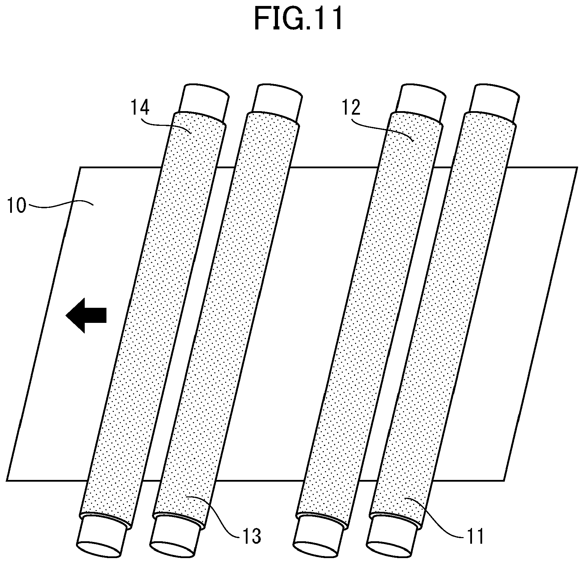

Since for a non-conductive target, it is difficult to conduct sputtering utilizing the direct-current power supply, generally employed is a dual magnetron sputtering method that utilizes a medium-frequency power supply (20 kHz to 200 kHz) to alternately apply electric powers to targets 111, 113 having the cesium source as a main component and targets 112, 114 having the tungsten source as a main component, which are arranged parallel to the base material 10, which moves in the direction of the arrow, as shown in FIG. 11. Moreover, a normal pulsed power supply and a high-voltage pulsed power supply (HiPMS) can be utilized.

Moreover, the temperature of the base material 10 (23) also affects the optical properties of the optical film. In order to obtain an optical film having the optical properties (refractive index n and extinction coefficient k) shown in Table 5 or Table 6 given above, such an optical film can be obtained by appropriately adjusting the sputtering gas, the sputtering electric power, and the temperature of the base material with a used sputtering film formation unit.

### (3B) Sputtering Film Formation Unit B and Film Forming Method

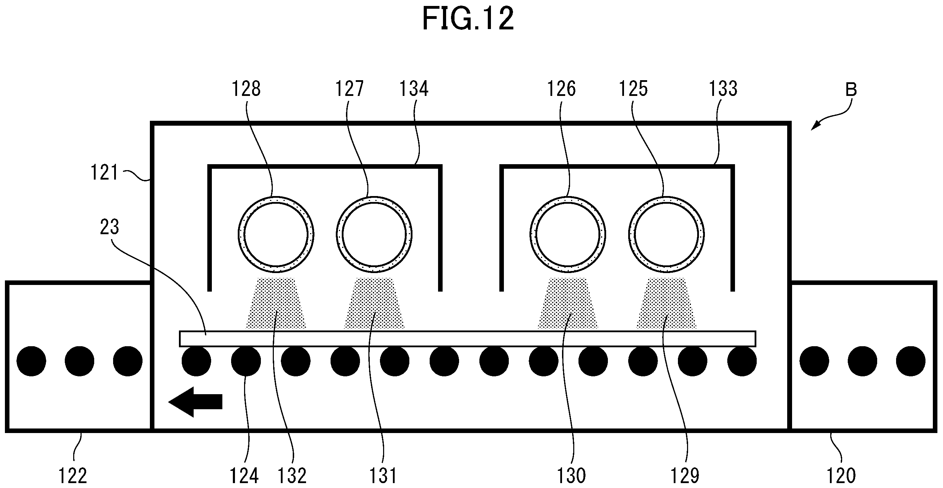

The sputtering film formation unit B which forms a film by the dual magnetron sputtering method includes: connection chambers 120, 122 and a film formation chamber 121 as shown in FIG. 12. Inside these connection chambers 120, 122 and film formation chamber 121, transfer rollers 124 which transfer the base material 23 are successively arranged. Inside the film formation chamber 121, dual magnetron cathode units 133, 134 which maintain film formation gas pressure are provided. Note that the base material 23 is heated to 400°C or more in the connection chamber 120 in advance. In addition, in two pairs of the dual magnetron cathode units 133, 134, rotary magnetron cathodes (not shown) to which rotary targets 125, 127 having a cesium source as a main component and rotary targets 126, 128 having a tungsten source as a main component are respectively attached are arranged, and the rotary targets 125, 126 and the rotary targets 127, 128 are each connected to the medium-frequency power supply such that the electric power is alternately applied thereto. Specifically, it is possible to conduct dual magnetron sputtering in which the electric power is alternately applied, using a power supply of 20 kHz to 200 kHz as the medium-frequency power supply. Moreover, a normal pulsed power supply or a high-voltage pulsed power supply (HiPMS) can also be utilized. In addition, in the rotary magnetron cathodes, which are not shown, magnets (not shown) that generate sputtering regions 129, 130, 131, 132 only on the base material 23 side of the rotary targets 125, 126, 127, 128 are arranged, which cause most of the target particles from the rotary targets 125, 126, 127, 128 to fly in the direction toward the base material 23, so that the attachment efficiency is around 90%.

The oxygen gas for conducting the reactive sputtering is introduced into each of the dual magnetron cathode units 133, 134. To control the amount of oxygen to be introduced into the dual magnetron cathode units 133, 134, for example, a control "impedance control" that sets the impedance change of the sputtering power supply to a set value or a plasma emission monitor (PEM) control that controls the plasma emission intensity of a specific wavelength to a set value may be employed.

Then, the sputtering film formation unit B shown in FIG. 12 in which two pairs of dual magnetron cathode units 133, 134 are arranged in the film formation chamber 121 is capable of forming two types of optical films at maximum. In a case where the same rotary target is incorporated in each of the two pairs of dual magnetron cathode units 133, 134, it becomes possible to form one type of optical films in two-fold film thickness. However, in the cathode arrangement as shown in FIG. 12, a film formed of a cesium oxide as a main component and a film formed of a tungsten oxide as a main component are laminated one on another.

Note that for the rotary target having the cesium source as a main component, a compound of cesium and tungsten such as cesium tungstate can be used, and an optical film in which the ratio between cesium and tungsten is adjusted can be obtained by using together the above rotary target with the rotary target having the tungsten source as a main component in the dual magnetron cathode units and adjusting the respective sputtering rates.

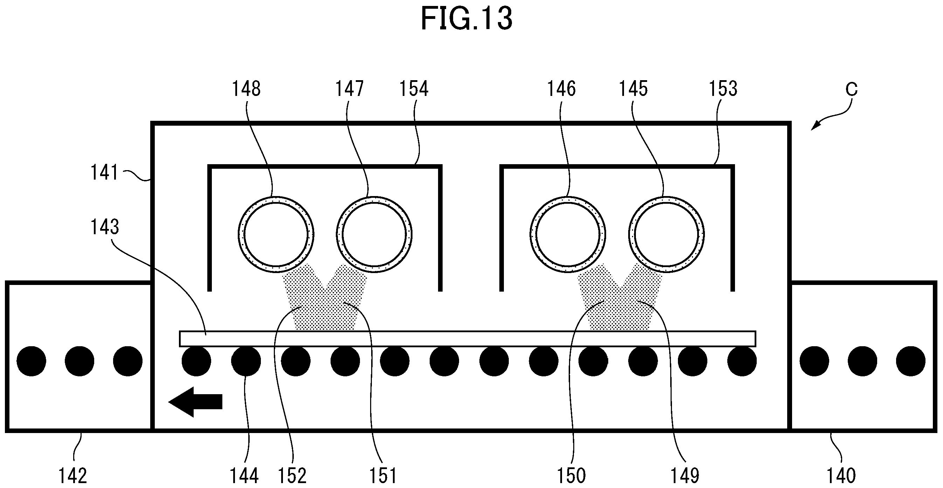

Meanwhile, in order to obtain an optical film in which the molar ratio between cesium and tungsten contained in the optical film is 1:2 to 1:4 by controlling the atmospheric oxygen partial pressure during film formation in the dual-sputtering method employing the rotary target having the cesium source as the main component and the rotary target having the tungsten source as a main component, magnet bars (not shown) inside the rotary magnetron cathodes may be arranged while inclined in a rotation direction as shown in FIG. 13 to overlap the sputtering film formation areas as shown in FIG. 13. In addition, it is also possible to swing the magnet bars slightly in the rotation direction.

Moreover, the temperature of the base material 23 also affects the optical properties of the optical film. In order to obtain an optical film having the optical properties shown in Table 5 or Table 6 given above, such an optical film can be obtained by appropriately adjusting the sputtering gas, the sputtering electric power, and the temperature of the base material with a used sputtering film formation unit.

### (3C) Sputtering Film Formation Unit C and Film Forming Method

The sputtering film formation unit C which forms a film such that sputtering film formation areas overlap, includes: connection chambers 140, 142 and a film formation chamber 141 as shown in FIG. 13. Inside these connection chambers 140, 142 and film formation chamber 141, transfer rollers 144 which transfer the base material 143 are successively arranged. Inside the film formation chamber 141, dual magnetron cathode units 153, 154 which maintain film formation gas pressure are provided. Note that the base material 143 is heated to 400°C or more in the connection chamber 140 in advance. In addition, in two pairs of the dual magnetron cathode units 153, 154, rotary magnetron cathode (not shown) to which rotary targets 145, 147 having a cesium oxide powder as a main component and rotary targets 146, 148 having a tungsten oxide powder as a main component are respectively attached are arranged, and the rotary targets 145, 146 and the rotary targets 147, 148 are each connected to the medium-frequency power supply such that the electric power is alternately applied thereto. Specifically, it is possible to conduct dual magnetron sputtering in which the electric power is alternately applied, using a power supply of 20 kHz to 200 kHz as the medium-frequency power supply. Moreover, a normal pulsed power supply or a high-voltage pulsed power supply (HiPMS) can also be utilized. In addition, in the rotary magnetron cathodes, which are not shown, magnets (not shown) that generate sputtering regions 149, 150, 151, 152 only on the base material 143 side of the rotary targets 145, 146, 147, 148 are arranged, which cause most of the target particles from the rotary targets 145, 146, 147, 148 to fly in the direction toward the base material 143, so that the attachment efficiency is around 90%.

The oxygen gas for conducting the reactive sputtering is introduced into each of the dual magnetron cathode units 153, 154. To control the amount of oxygen to be introduced into the dual magnetron cathode units 153, 154, for example, a control "impedance control" that sets the impedance change of the sputtering power supply to a set value or a plasma emission monitor (PEM) control that controls the plasma emission intensity of a specific wavelength to a set value may be employed.

In addition, in the case of using the sputtering film formation unit C, regarding the proportion of cesium atoms and the proportion of tungsten atoms in one of the rotary targets arranged in the dual magnetron cathode units 153, 154, it is also possible to employ a blend that is shifted from the proportion of cesium atoms and the proportion of tungsten atoms of a target optical film, thereby making the other rotary target with cesium or tungsten that runs short in the one rotary target. For example, it is also possible to form the rotary targets 145, 147 with Cs₂WO₄ and the rotary targets 146, 148 with a tungsten source.

Moreover, the temperature of the base material 143 also affects the optical properties of the optical film. In order to obtain an optical film having the optical properties shown in Table 5 or Table 6 given above, such an optical film can be obtained by appropriately adjusting the sputtering gas, the sputtering electric power, and the temperature of the base material with a used sputtering film formation unit.

### [Examples]

Examples of the present invention is specifically described below while giving Comparative Examples as well.

As an ellipsometer, "model RC2-XNIR" manufactured by J. A. Woollam was used, the optical properties (transmittance and reflectance) of an optical film were measured using "model V-670" manufactured by JASCO Corporation, and the surface resistance of the optical film was measured using "Loresta-GX" manufactured by Mitsubishi Chemical Corporation.

In addition, the sputtering target was obtained by molding a cesium tungsten composite oxide powder manufactured by Sumitomo Metal Mining Co., Ltd. into a circular shape of 8 inches, and loading the obtained molded body into a hot-press apparatus to sinter the molded body under conditions of vacuum atmosphere, a temperature of 950°C, and a pressing pressure of 250 kgf/cm².

The sputtering target having an outer diameter of 8 inches thus obtained was bonded to a backing plate made of copper with indium, and the sputtering target fixed to the backing plate was placed in the sputtering apparatus (film formation apparatus) shown in FIG. 8.

A high-frequency power supply (13 MHz) was used as the power supply for this sputtering apparatus (film formation apparatus), oxygen was introduced from the sputtering cathode 106, and the distance between the sputtering target 104 and the base material 10 was set to 100 mm.

Note that a synthetic quartz wafer having a diameter of 8 inches was used as the above base material 10. In addition, the base material 10 was heated to 400°C or more using a near-infrared heater.

### Comparative Examples 1 to 4, Examples 1 to 3

The film formation chamber of the sputtering apparatus (film formation apparatus) shown in FIG. 8 was discharged by vacuum to 5×10⁻⁴ Pa or lower. Thereafter, 800 sccm of argon gas mixed with oxygen was introduced.

Optical films respectively having a film thickness of 300 nm (Comparative Example 1), a film thickness of 320 nm (Comparative Example 2), a film thickness of 340 nm (Comparative Example 3), and a film thickness of 360 nm (Comparative Example 4) were formed on the above base material 10 by introducing argon gas mixed with a gas having an oxygen concentration of 3% and setting the film formation speed to about 1 nm/sec.

When the optical films according to Comparative Examples 1 to 4 were measured using the above "model V-670" manufactured by JASCO Corporation, these optical films had characteristics of heat ray shielding films, that is, high average transmittance in the visible wavelength band (wavelength of 400 nm to 550 nm) and low reflectance in the near-infrared band (wavelength of 2000 nm) as shown in Table 11-1 and Table 11-2 given below. When optical constants (refractive index n and extinction coefficient k) of the optical films according to Comparative Examples 1 to 4 having such characteristics were measured using the above ellipsometer "model RC2-XNIR", the refractive indices and the extinction coefficients were as shown in Table 9 given below.

**[Table 9]**

| nm | n-min | n-max | nm | k-min | k-max |
|---|---|---|---|---|---|
| 300 | 2.6 | 3.2 | 300 | 0.3 | 0.7 |
| 400 | 2.1 | 2.6 | 400 | 0.0 | 0.2 |
| 600 | 1.9 | 2.3 | 600 | 0.0 | 0.2 |
| 800 | 1.8 | 2.1 | 800 | 0.0 | 0.3 |
| 1000 | 1.7 | 2.1 | 1000 | 0.0 | 0.5 |
| 1200 | 1.7 | 2.1 | 1200 | 0.0 | 0.7 |
| 1400 | 1.7 | 2.2 | 1400 | 0.1 | 0.8 |
| 1600 | 1.7 | 2.3 | 1600 | 0.1 | 0.9 |
| 1800 | 1.7 | 2.4 | 1800 | 0.2 | 1.0 |
| 2000 | 1.8 | 2.6 | 2000 | 0.2 | 1.0 |
| 2200 | 1.9 | 2.7 | 2200 | 0.3 | 1.0 |
| 2400 | 1.9 | 2.8 | 2400 | 0.3 | 1.0 |

Subsequently, annealing treatment was conducted on the optical films respectively having a film thickness of 320 nm (Comparative Example 2), a film thickness of 340 nm (Comparative Example 3), and a film thickness of 360 nm (Comparative Example 4) under a nitrogen atmosphere at about 700°C to reduce the surfaces of the respective optical films.

It is considered that the depth of reduction from the surface of an optical film depends on the annealing time, and the annealing time was set to three stages of 2 minutes, 4 minutes, and 6 minutes. In addition, when the optical constants (refractive index n and extinction coefficient k) on the surface side of each optical film reduced by the annealing treatment were measured using the above ellipsometer "model RC2-XNIR" in the same manner, the refractive indices and the extinction coefficients were as shown in Table 10 given below. Moreover, the depth on the surface side of an optical film reduced by the annealing treatment can also be estimated from changes in optical constants obtained by the ellipsometric analysis on the optical film in the depth direction. This result is also shown in Table 11-1 and Table 11-2 given below.

**[Table 10]**

| nm | n-min | n-max | nm | k-min | k-max |
|---|---|---|---|---|---|
| 300 | 2.1 | 2.6 | 300 | 1.0 | 1.5 |
| 400 | 1.9 | 2.6 | 400 | 0.0 | 0.5 |
| 600 | 1.2 | 1.6 | 600 | 0.1 | 0.5 |
| 800 | 0.7 | 1.2 | 800 | 0.7 | 1.1 |
| 1000 | 0.5 | 1.1 | 1000 | 1.3 | 1.8 |
| 1200 | 0.4 | 1.0 | 1200 | 2.0 | 2.4 |
| 1400 | 0.5 | 1.1 | 1400 | 2.6 | 3.1 |
| 1600 | 0.7 | 1.3 | 1600 | 3.2 | 3.8 |
| 1800 | 1.0 | 1.6 | 1800 | 3.6 | 4.3 |
| 2000 | 1.4 | 1.9 | 2000 | 4.0 | 4.8 |
| 2200 | 1.8 | 2.2 | 2200 | 4.3 | 5.1 |
| 2400 | 2.0 | 2.5 | 2400 | 4.5 | 5.4 |

Then, an optical film having an optical film film thickness of 320 nm whose depth on the reduced surface side was 20 nm (that is, the annealing time was 2 minutes: the surface layer film thickness was 20 nm, the internal layer film thickness was 300 nm) was used as Example 1, an optical film having an optical film film thickness of 340 nm whose depth on the reduced surface side was 40 nm (that is, the annealing time was 4 minutes: the surface layer film thickness was 40 nm, the internal layer film thickness was 300 nm) was used as Example 2, and an optical film having an optical film film thickness of 360 nm whose depth on the reduced surface side was 60 nm (that is, the annealing time was 6 minutes: the surface layer film thickness was 60 nm, the internal layer film thickness was 300 nm) was used as Example 3. When the optical films according to Examples 1 to 3 were measured using the above "model V-670" manufactured by JASCO Corporation in the same manner as in Comparative Examples, the optical films had characteristics of heat ray shielding films, that is, relatively low average transmittance in the visible wavelength band (wavelength of 400 nm to 550 nm) but high reflectance in the near-infrared wavelength band (wavelength of 2000 nm) as shown in Table 11-1 and Table 11-2 given below.

Then, as confirmed from Table 11-1 and Table 11-2 given below, in Examples 1 to 3, since light in the near-infrared band that is incident on each optical film is reflected on the surface side, the effect of suppressing heat generation of the base material due to heat ray absorption can be expected.

Note that it can be easily assumed that even when a film (surface-side layer) having the same optical constants as a film reduced by the annealing treatment is directly formed on a base material-side layer by sputtering in placed of the annealing treatment, the same spectro-optical properties will be achieved.

**[Table 11-1]**

| | Internal Layer Film Thickness (nm) | Surface Layer Film Thickness (nm) | Optical film film thickness (nm) Internal Layer + Surface layer |
|---|---|---|---|
| Comparative Example 1 | 300 | 0 | 300 |
| Comparative Example 2 | 320 | 0 | 320 |
| Comparative Example 3 | 340 | 0 | 340 |
| Comparative Example 4 | 360 | 0 | 360 |
| Example 1 | 300 | 20 | 320 |
| Example 2 | 300 | 40 | 340 |
| Example 3 | 300 | 60 | 360 |
| Comparative Example 5 | 400 | 0 | 400 |
| Comparative Example 6 | 420 | 0 | 420 |
| Comparative Example 7 | 440 | 0 | 440 |
| Comparative Example 8 | 460 | 0 | 460 |
| Example 4 | 400 | 20 | 420 |
| Example 5 | 400 | 40 | 440 |
| Example 6 | 400 | 60 | 460 |
| Comparative Example 9 | 500 | 0 | 500 |
| Comparative Example 10 | 520 | 0 | 520 |
| Comparative Example 11 | 540 | 0 | 540 |
| Comparative Example 12 | 560 | 0 | 560 |
| Example 7 | 500 | 20 | 520 |
| Example 8 | 500 | 40 | 540 |
| Example 9 | 500 | 60 | 560 |

**[Table 11-2]**

| | Average Transmittance (%) in Wavelength of 400 to 550 nm | Reflectance (%) in Wavelength of 2000 nm | Surface Resistance (Ω/□) |
|---|---|---|---|
| Comparative Example 1 | 66 | 24 | >10⁴ |
| Comparative Example 2 | 66 | 23 | >10⁴ |
| Comparative Example 3 | 67 | 22 | >10⁴ |
| Comparative Example 4 | 67 | 21 | >10⁴ |
| Example 1 | 59 | 46 | >10⁴ |
| Example 2 | 56 | 59 | >10⁴ |
| Example 3 | 51 | 67 | >10⁴ |
| Comparative Example 5 | 63 | 20 | >10⁴ |
| Comparative Example 6 | 63 | 21 | >10⁴ |
| Comparative Example 7 | 63 | 21 | >10⁴ |
| Comparative Example 8 | 62 | 21 | >10⁴ |
| Example 4 | 57 | 43 | >10⁴ |
| Example 5 | 53 | 57 | >10⁴ |
| Example 6 | 49 | 66 | >10⁴ |
| Comparative Example 9 | 61 | 22 | >10⁴ |
| Comparative Example 10 | 60 | 22 | >10⁴ |
| Comparative Example 11 | 59 | 22 | >10⁴ |
| Comparative Example 12 | 58 | 23 | >10⁴ |
| Example 7 | 54 | 43 | >10⁴ |
| Example 8 | 50 | 58 | >10⁴ |
| Example 9 | 46 | 66 | >10⁴ |

### Comparative Examples 5 to 8, Examples 4 to 6

In the same manner as above, optical films respectively having a film thickness of 400 nm (Comparative Example 5), a film thickness of 420 nm (Comparative Example 6), a film thickness of 440 nm (Comparative Example 7), and a film thickness of 460 nm (Comparative Example 8) were formed on the above base material 10 by introducing argon gas mixed with a gas having an oxygen concentration of 3% and setting the film formation speed to about 1 nm/sec.

When the optical films according to Comparative Examples 5 to 8 were measured using "model V-670" manufactured by JASCO Corporation, these optical films had characteristics of heat ray shielding films, that is, high average transmittance in the visible wavelength band (wavelength of 400 nm to 550 nm) and low reflectance in the near-infrared band (wavelength of 2000 nm) as shown in Table 11-1 and Table 11-2 given above.

When optical constants (refractive index n and extinction coefficient k) of the optical films according to Comparative Examples 5 to 8 having such characteristics were measured using the ellipsometer "model RC2-XNIR", the refractive indices and the extinction coefficients were as shown in Table 9 given above.

Subsequently, annealing treatment was conducted on the optical films respectively having a film thickness of 420 nm (Comparative Example 6), a film thickness of 440 nm (Comparative Example 7), and a film thickness of 460 nm (Comparative Example 8) under a nitrogen atmosphere at about 700°C for three stages of annealing time of 2 minutes, 4 minutes, and 6 minutes to reduce the surfaces of the respective optical films.

In addition, when the optical constants (refractive index n and extinction coefficient k) on the surface side of each optical film reduced by the annealing treatment were measured using the above ellipsometer "model RC2-XNIR" in the same manner, the refractive indices and the extinction coefficients were as shown in Table 10 given above. Moreover, the depth on the surface side of each optical film reduced by the annealing treatment was estimated from changes in optical constants obtained by the ellipsometric analysis on the optical film in the depth direction. This result is also shown in Table 11-1 and Table 11-2given above.

Then, an optical film having an optical film film thickness of 420 nm whose depth on the reduced surface side was 20 nm (that is, the surface layer film thickness was 20 nm, the internal layer film thickness was 400 nm) was used as Example 4, an optical film having an optical film film thickness of 440 nm whose depth on the reduced surface side was 40 nm (that is, the surface layer film thickness was 40 nm, the internal layer film thickness was 400 nm) was used as Example 5, and an optical film having an optical film film thickness of 460 nm whose depth on the reduced surface side was 60 nm (that is, the surface layer film thickness was 60 nm, the internal layer film thickness was 400 nm) was used as Example 6. When the optical films according to Examples 4 to 6 were measured using the above "model V-670" manufactured by JASCO Corporation in the same manner as in Comparative Examples, the optical films had characteristics of heat ray shielding films, that is, relatively low average transmittance in the visible wavelength band (wavelength of 400 nm to 550 nm) but high reflectance in the near-infrared band (wavelength of 2000 nm) as shown in Table 11-1 and Table 11-2 given above.

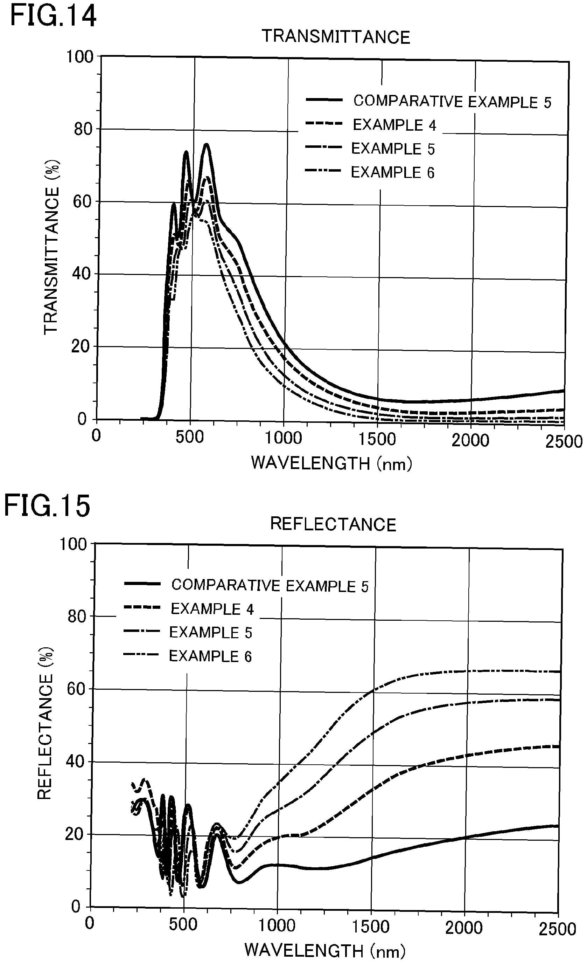

Note that the spectro-optical properties (wavelength and transmittance) of the optical films according to Examples 4 to 6 and Comparative Example 5 are shown in FIG. 14, and the spectro-optical properties (wavelength and reflectance) of the optical films according to Examples 4 to 6 and Comparative Example 5 are shown in FIG. 15.

Then, as confirmed from Table 11-1 and Table 11-2 as well as the graphs of FIG. 14 and FIG. 15, in Examples 4 to 6 as well, since light in the near-infrared band that is incident on each optical film is reflected on the surface side, the effect of suppressing heat generation of the base material due to heat ray absorption can be expected.

### Comparative Examples 9 to 12, Examples 7 to 9

In the same manner as above, optical films respectively having a film thickness of 500 nm (Comparative Example 9), a film thickness of 520 nm (Comparative Example 10), a film thickness of 540 nm (Comparative Example 11), and a film thickness of 560 nm (Comparative Example 12) were formed on the above base material 10 by introducing argon gas mixed with a gas having an oxygen concentration of 3% and setting the film formation speed to about 1 nm/sec.

When the optical films according to Comparative Examples 9 to 12 were measured using "model V-670" manufactured by JASCO Corporation, these optical films had characteristics of heat ray shielding films, that is, high average transmittance in the visible wavelength band (wavelength of 400 nm to 550 nm) and low reflectance in the near-infrared band (wavelength of 2000 nm) as shown in Table 11-1 and Table 11-2 given above.

When optical constants (refractive index n and extinction coefficient k) of the optical films according to Comparative Examples 9 to 12 having such characteristics were measured using the ellipsometer "model RC2-XNIR", the refractive indices and the extinction coefficients were as shown in Table 9 given above.

Subsequently, annealing treatment was conducted on the optical films respectively having a film thickness of 520 nm (Comparative Example 10), a film thickness of 540 nm (Comparative Example 11), and a film thickness of 560 nm (Comparative Example 12) under a nitrogen atmosphere at about 700°C for three stages of annealing time of 2 minutes, 4 minutes, and 6 minutes to reduce the surfaces of the respective optical films.

In addition, when the optical constants (refractive index n and extinction coefficient k) on the surface side of each optical film reduced by the annealing treatment were measured using the above ellipsometer "model RC2-XNIR" in the same manner, the refractive indices and the extinction coefficients were as shown in Table 10 given above. Moreover the depth on the surface side of each optical film reduced by the annealing treatment was estimated from changes in optical constants obtained by the ellipsometric analysis on the optical film in the depth direction. This result is also shown in Table 11-1 and Table 11-2 given above.

Then, an optical film having an optical film film thickness of 520 nm whose depth on the reduced surface side was 20 nm (that is, the surface layer film thickness was 20 nm, the internal layer film thickness was 500 nm) was used as Example 7, an optical film having an optical film film thickness of 540 nm whose depth on the reduced surface side was 40 nm (that is, the surface layer film thickness was 40 nm, the internal layer film thickness was 500 nm) was used as Example 8, and an optical film having an optical film film thickness of 560 nm whose depth on the reduced surface side was 60 nm (that is, the surface layer film thickness was 60 nm, the internal layer film thickness was 500 nm) was used as Example 9. When the optical films according to Examples 7 to 9 were measured using the above "model V-670" manufactured by JASCO Corporation in the same manner as in Comparative Examples, the optical films had characteristics of heat ray shielding films, that is, relatively low average transmittance in the visible wavelength band (wavelength of 400 nm to 550 nm) but high reflectance in the near-infrared band (wavelength of 2000 nm) as shown in Table 11-1 and Table 11-2 given above.

Then, as confirmed from Table 11-1 and Table 11-2, in Examples 7 to 9 as well, since light in the near-infrared band that is incident on each optical film is reflected on the surface side, the effect of suppressing heat generation of the base material due to heat ray absorption can be expected.

### POSSIBILITY OF INDUSTRIAL APPLICATION

The optical film according to the present invention makes it possible to obtain a half-reflective heat ray shielding film that has radio wave transparency and optical transmissivity in the visible wavelength band as well as reduced absorbance in the near-infrared wavelength band, and thus has a possibility of industrial application to be used for window glasses for reducing the amounts of energy consumed by air conditioners in summer.

### REFERENCE SIGNS LIST

1 backing tube
2 cylinder-shaped target (rotary target)
10 base material
11, 12, 13, 14 rotary target
20, 22 connection chamber
21 film formation chamber
23 base material (glass base material)
24 transfer roller
25, 26, 27, 28 rotary target
29, 30, 31, 32 sputtering region
33, 34 dual magnetron cathode unit
60, 68 base material storage chamber
62, 64, 66 sputtering film formation unit
61, 63, 65, 67 connection chamber
100 base material
101 surface layer
102 internal layer
103 backing plate
104 sputtering target
105 sputtering apparatus (film formation apparatus)
106 sputtering cathode
107 base material holding member
108 cesium tungsten composite oxide film
111, 112, 113, 114 target
120, 122 connection chamber
121 film formation chamber
124 transfer roller
125, 126, 127, 128 rotary target
129, 130, 131, 132 sputtering region
133, 134 dual magnetron cathode unit
140, 142 connection chamber
141 film formation chamber
143 base material
144 transfer roller
145, 146, 147, 148 rotary target
149, 150, 151, 152 sputtering region
153, 154 dual magnetron cathode unit

## Claims

1. An optical film formed on a base material (10, 23, 100, 143) and composed of a cesium tungsten composite oxide containing cesium, tungsten, and oxygen, wherein
the optical film is composed of: a surface layer (101) which is located on a surface side and has a thickness of 20 nm to 60 nm; and an internal layer (102) which is located on a base material side,
a refractive index n and an extinction coefficient k of the surface layer (101) are each set within the numerical ranges in Table 12 given below
**[Table 12]**
| nm | n-min | n-max | nm | k-min | k-max |
|---|---|---|---|---|---|
| 300 | 2.1 | 2.6 | 300 | 1.0 | 1.5 |
| 400 | 1.9 | 2.6 | 400 | 0.0 | 0.5 |
| 600 | 1.2 | 1.6 | 600 | 0.1 | 0.5 |
| 800 | 0.7 | 1.2 | 800 | 0.7 | 1.1 |
| 1000 | 0.5 | 1.1 | 1000 | 1.3 | 1.8 |
| 1200 | 0.4 | 1.0 | 1200 | 2.0 | 2.4 |
| 1400 | 0.5 | 1.1 | 1400 | 2.6 | 3.1 |
| 1600 | 0.7 | 1.3 | 1600 | 3.2 | 3.8 |
| 1800 | 1.0 | 1.6 | 1800 | 3.6 | 4.3 |
| 2000 | 1.4 | 1.9 | 2000 | 4.0 | 4.8 |
| 2200 | 1.8 | 2.2 | 2200 | 4.3 | 5.1 |
| 2400 | 2.0 | 2.5 | 2400 | 4.5 | 5.4 |
, and
a refractive index n and an extinction coefficient k of the internal layer (102) are each set within numerical ranges in Table 13 given below.
**[Table 13]**
| nm | n-min | n-max | nm | k-min | k-max |
|---|---|---|---|---|---|
| 300 | 2.6 | 3.2 | 300 | 0.3 | 0.7 |
| 400 | 2.1 | 2.6 | 400 | 0.0 | 0.2 |
| 600 | 1.9 | 2.3 | 600 | 0.0 | 0.2 |
| 800 | 1.8 | 2.1 | 800 | 0.0 | 0.3 |
| 1000 | 1.7 | 2.1 | 1000 | 0.0 | 0.5 |
| 1200 | 1.7 | 2.1 | 1200 | 0.0 | 0.7 |
| 1400 | 1.7 | 2.2 | 1400 | 0.1 | 0.8 |
| 1600 | 1.7 | 2.3 | 1600 | 0.1 | 0.9 |
| 1800 | 1.7 | 2.4 | 1800 | 0.2 | 1.0 |
| 2000 | 1.8 | 2.6 | 2000 | 0.2 | 1.0 |
| 2200 | 1.9 | 2.7 | 2200 | 0.3 | 1.0 |
| 2400 | 1.9 | 2.8 | 2400 | 0.3 | 1.0 |

2. The optical film according to claim 1, wherein
in the optical film having a film thickness of 300 nm to 560 nm, average transmittance in a region of a wavelength of 400 nm to 550 nm is 45% or more, and reflectance in a wavelength of 2000 nm is 40% or more.

3. A method of producing an optical film according to claim 1 or 2, comprising:
a film forming step of forming a cesium tungsten composite oxide film (108) of which a refractive index n and an extinction coefficient k are each set within numerical ranges in Table 14 given below on a base material (10, 23, 100, 143) by using a sputtering target (2, 11, 12, 13, 14, 25, 26, 27, 28, 104, 111, 112, 113, 114, 125, 126, 127, 128, 145, 146, 147, 148) comprised of cesium atoms, tungsten atoms, and oxygen, conducting feedback control of an oxygen partial pressure of a sputtering film formation atmosphere, and controlling a heating temperature of the base material (10, 23, 100, 143),
**[Table 14]**
| nm | n-min | n-max | nm | k-min | k-max |
|---|---|---|---|---|---|
| 300 | 2.6 | 3.2 | 300 | 0.3 | 0.7 |
| 400 | 2.1 | 2.6 | 400 | 0.0 | 0.2 |
| 600 | 1.9 | 2.3 | 600 | 0.0 | 0.2 |
| 800 | 1.8 | 2.1 | 800 | 0.0 | 0.3 |
| 1000 | 1.7 | 2.1 | 1000 | 0.0 | 0.5 |
| 1200 | 1.7 | 2.1 | 1200 | 0.0 | 0.7 |
| 1400 | 1.7 | 2.2 | 1400 | 0.1 | 0.8 |
| 1600 | 1.7 | 2.3 | 1600 | 0.1 | 0.9 |
| 1800 | 1.7 | 2.4 | 1800 | 0.2 | 1.0 |
| 2000 | 1.8 | 2.6 | 2000 | 0.2 | 1.0 |
| 2200 | 1.9 | 2.7 | 2200 | 0.3 | 1.0 |
| 2400 | 1.9 | 2.8 | 2400 | 0.3 | 1.0 |
; and
an annealing step of conducting an annealing treatment on the formed cesium tungsten composite oxide film (108) to form a surface layer (101) of which a refractive index n and an extinction coefficient k are each set within numerical ranges in Table 15 given below on a surface side of the cesium tungsten composite oxide film (108), and to form an internal layer (102) of which a refractive index n and an extinction coefficient k are each set within the numerical ranges in Table 14 given above in a portion on the base material side of the cesium tungsten composite oxide film (108) except the surface layer (101).
**[Table 15]**
| nm | n-min | n-max | nm | k-min | k-max |
|---|---|---|---|---|---|
| 300 | 2.1 | 2.6 | 300 | 1.0 | 1.5 |
| 400 | 1.9 | 2.6 | 400 | 0.0 | 0.5 |
| 600 | 1.2 | 1.6 | 600 | 0.1 | 0.5 |
| 800 | 0.7 | 1.2 | 800 | 0.7 | 1.1 |
| 1000 | 0.5 | 1.1 | 1000 | 1.3 | 1.8 |
| 1200 | 0.4 | 1.0 | 1200 | 2.0 | 2.4 |
| 1400 | 0.5 | 1.1 | 1400 | 2.6 | 3.1 |
| 1600 | 0.7 | 1.3 | 1600 | 3.2 | 3.8 |
| 1800 | 1.0 | 1.6 | 1800 | 3.6 | 4.3 |
| 2000 | 1.4 | 1.9 | 2000 | 4.0 | 4.8 |
| 2200 | 1.8 | 2.2 | 2200 | 4.3 | 5.1 |
| 2400 | 2.0 | 2.5 | 2400 | 4.5 | 5.4 |

4. The method of producing an optical film according to claim 3, wherein
the annealing step is conducted at a temperature of 300°C or more under an oxygen-free atmosphere.

5. The method of producing an optical film according to claim 3 or 4, wherein
a ratio between cesium atoms and tungsten atoms (Cs:W) of the sputtering target (2, 11, 12, 13, 14, 25, 26, 27, 28, 104, 111, 112, 113, 114, 125, 126, 127, 128, 145, 146, 147, 148) is 1:2 to 1:4.

6. The method of producing an optical film according to claim 3 or 4, wherein
the film forming step is conducted by a dual-sputtering method using a sputtering target (111, 113, 125, 127, 145, 147) of cesium source and a sputtering target (112, 114, 126, 128, 146, 148) of tungsten source, and conducts feedback control of an oxygen partial pressure of a dual-sputtering film formation atmosphere and adjusts an electric power to be applied to a sputtering cathode (106) or a duty ratio such that a ratio between cesium atoms and tungsten atoms (Cs:W) contained in the cesium tungsten composite oxide film (108) becomes 1:2 to 1:4.

7. The method of producing an optical film according to any one of claims 3 to 6, wherein
the feedback control of the oxygen partial pressure is conducted by an impedance controller which conducts feedback control of an impedance change during film formation.

8. The method of producing an optical film according to any one of claims 3 to 6, wherein
the feedback control of the oxygen partial pressure is conducted by a plasma emission monitor which measures an emission intensity of a specific wavelength during film formation to conduct the feedback control of the oxygen partial pressure.

## Patentansprüche

1. Optischer Film, der auf einem Basismaterial (10, 23, 100, 143) gebildet ist und aus einem Cäsium-Wolfram-Verbundoxid zusammengesetzt ist, das Cäsium, Wolfram und Sauerstoff enthält, wobei
der optische Film zusammengesetzt ist aus: einer Oberflächenschicht (101), die auf einer Oberflächenseite lokalisiert ist und eine Dicke von 20 nm bis 60 nm aufweist; und einer inneren Schicht (102), die auf einer Basismaterialseite lokalisiert ist,
ein Brechungsindex n und ein Extinktionskoeffizient k der Oberflächenschicht (101) jeweils innerhalb der Zahlenbereiche in der unten angegebenen Tabelle 12 eingestellt sind
**[Tabelle 12]**
| nm | n-min | n-max | nm | k-min | k-max |
|---|---|---|---|---|---|
| 300 | 2,1 | 2,6 | 300 | 1,0 | 1,5 |
| 400 | 1,9 | 2,6 | 400 | 0,0 | 0,5 |
| 600 | 1,2 | 1,6 | 600 | 0,1 | 0,5 |
| 800 | 0,7 | 1,2 | 800 | 0,7 | 1,1 |
| 1000 | 0,5 | 1,1 | 1000 | 1,3 | 1,8 |
| 1200 | 0,4 | 1,0 | 1200 | 2,0 | 2,4 |
| 1400 | 0,5 | 1,1 | 1400 | 2,6 | 3,1 |
| 1600 | 0,7 | 1,3 | 1600 | 3,2 | 3,8 |
| 1800 | 1,0 | 1,6 | 1800 | 3,6 | 4,3 |
| 2000 | 1,4 | 1,9 | 2000 | 4,0 | 4,8 |
| 2200 | 1,8 | 2,2 | 2200 | 4,3 | 5,1 |
| 2400 | 2,0 | 2,5 | 2400 | 4,5 | 5,4 |
und
ein Brechungsindex n und ein Extinktionskoeffizient k der inneren Schicht (102) jeweils innerhalb der in der unten Tabelle 13 angegebenen Zahlenbereiche eingestellt sind.
**[Tabelle 13]**
| nm | n-min | n-max | nm | k-min | k-max |
|---|---|---|---|---|---|
| 300 | 2,6 | 3,2 | 300 | 0,3 | 0,7 |
| 400 | 2,1 | 2,6 | 400 | 0,0 | 0,2 |
| 600 | 1,9 | 2,3 | 600 | 0,0 | 0,2 |
| 800 | 1,8 | 2,1 | 800 | 0,0 | 0,3 |
| 1000 | 1,7 | 2,1 | 1000 | 0,0 | 0,5 |
| 1200 | 1,7 | 2,1 | 1200 | 0,0 | 0,7 |
| 1400 | 1,7 | 2,2 | 1400 | 0,1 | 0,8 |
| 1600 | 1,7 | 2,3 | 1600 | 0,1 | 0,9 |
| 1800 | 1,7 | 2,4 | 1800 | 0,2 | 1,0 |
| 2000 | 1,8 | 2,6 | 2000 | 0,2 | 1,0 |
| 2200 | 1,9 | 2,7 | 2200 | 0,3 | 1,0 |
| 2400 | 1,9 | 2,8 | 2400 | 0,3 | 1,0 |

2. Optischer Film nach Anspruch 1, wobei
in dem optischen Film mit einer Filmdicke von 300 nm bis 560 nm der durchschnittliche Transmissionsgrad in einem Bereich einer Wellenlänge von 400 nm bis 550 nm 45% oder mehr beträgt und der Reflexionsgrad bei einer Wellenlänge von 2000 nm 40% oder mehr beträgt.

3. Verfahren zum Herstellen eines optischen Films nach Anspruch 1 oder 2, das aufweist:
einen Filmbildungsschritt des Bildens eines Cäsium-Wolfram-Verbundoxidfilms (108), dessen Brechungsindex n und Extinktionskoeffizient k jeweils innerhalb der numerischen Bereiche in der unten angegebenen Tabelle 14 auf einem Basismaterial (10, 23, 100, 143) eingestellt sind, unter Verwendung eines Sputtertargets (2, 11, 12, 13, 14, 25, 26, 27, 28, 104, 111, 112, 113, 114, 125, 126, 127, 128, 145, 146, 147, 148), das Cäsiumatome, Wolframatome und Sauerstoff aufweist, Durchführen einer Rückkopplungssteuerung eines Sauerstoffpartialdrucks einer Sputterfilm-Bildungsatmosphäre und Steuern einer Erwärmungstemperatur des Basismaterials (10, 23, 100, 143),
**[Tabelle 14]**
| nm | n-min | n-max | nm | k-min | k-max |
|---|---|---|---|---|---|
| 300 | 2,6 | 3,2 | 300 | 0,3 | 0,7 |
| 400 | 2,1 | 2,6 | 400 | 0,0 | 0,2 |
| 600 | 1,9 | 2,3 | 600 | 0,0 | 0,2 |
| 800 | 1,8 | 2,1 | 800 | 0,0 | 0,3 |
| 1000 | 1,7 | 2,1 | 1000 | 0,0 | 0,5 |
| 1200 | 1,7 | 2,1 | 1200 | 0,0 | 0,7 |
| 1400 | 1,7 | 2,2 | 1400 | 0,1 | 0,8 |
| 1600 | 1,7 | 2,3 | 1600 | 0,1 | 0,9 |
| 1800 | 1,7 | 2,4 | 1800 | 0,2 | 1,0 |
| 2000 | 1,8 | 2,6 | 2000 | 0,2 | 1,0 |
| 2200 | 1,9 | 2,7 | 2200 | 0,3 | 1,0 |
| 2400 | 1,9 | 2,8 | 2400 | 0,3 | 1,0 |
; und
einen Temperschritt des Durchführens einer Temperbehandlung an dem gebildeten Cäsium-Wolfram-Verbundoxidfilm (108), um eine Oberflächenschicht (101) zu bilden, deren Brechungsindex n und Extinktionskoeffizient k jeweils innerhalb der numerischen Bereiche in der unten angegebenen Tabelle 15 auf einer Oberflächenseite des Cäsium-Wolfram-Verbundoxidfilms (108) eingestellt sind, und um eine innere Schicht (102) zu bilden, deren Brechungsindex n und deren Extinktionskoeffizient k jeweils innerhalb der numerischen Bereiche in der oben angegebenen Tabelle 14 in einem Abschnitt auf der Basismaterialseite des Cäsium-Wolfram-Verbundoxidfilms (108) mit Ausnahme der Oberflächenschicht (101) eingestellt sind.
**[Tabelle 15]**
| nm | n-min | n-max | nm | k-min | k-max |
|---|---|---|---|---|---|
| 300 | 2,1 | 2,6 | 300 | 1,0 | 1,5 |
| 400 | 1,9 | 2,6 | 400 | 0,0 | 0,5 |
| 600 | 1,2 | 1,6 | 600 | 0,1 | 0,5 |
| 800 | 0,7 | 1,2 | 800 | 0,7 | 1,1 |
| 1000 | 0,5 | 1,1 | 1000 | 1,3 | 1,8 |
| 1200 | 0,4 | 1,0 | 1200 | 2,0 | 2,4 |
| 1400 | 0,5 | 1,1 | 1400 | 2,6 | 3,1 |
| 1600 | 0,7 | 1,3 | 1600 | 3,2 | 3,8 |
| 1800 | 1,0 | 1,6 | 1800 | 3,6 | 4,3 |
| 2000 | 1,4 | 1,9 | 2000 | 4,0 | 4,8 |
| 2200 | 1,8 | 2,2 | 2200 | 4,3 | 5,1 |
| 2400 | 2,0 | 2,5 | 2400 | 4,5 | 5,4 |

4. Verfahren zum Herstellen eines optischen Films nach Anspruch 3, wobei
der Temperschritt bei einer Temperatur von 300°C oder mehr unter einer sauerstofffreien Atmosphäre durchgeführt wird.

5. Verfahren zum Herstellen eines optischen Films nach Anspruch 3 oder 4, wobei
ein Verhältnis zwischen Cäsiumatomen und Wolframatomen (Cs:W) des Sputtertargets (2, 11, 12, 13, 14, 25, 26, 27, 28, 104, 111, 112, 113, 114, 125, 126, 127, 128, 145, 146, 147, 148) 1:2 bis 1:4 beträgt.

6. Verfahren zum Herstellen eines optischen Films nach Anspruch 3 oder 4, wobei
der Filmbildungsschritt durch ein Dual-Sputter-Verfahren unter Verwendung eines Sputtertargets (111, 113, 125, 127, 145, 147) einer Cäsiumquelle und eines Sputtertargets (112, 114, 126, 128, 146, 148) einer Wolframquelle durchgeführt wird, und eine Rückkopplungssteuerung eines Sauerstoffpartialdrucks einer Dual-Sputter-Filmbildungsatmosphäre durchführt und eine an eine Sputterkathode (106) anzulegende elektrische Leistung oder ein Tastgrad (duty ratio) einstellt, so dass ein Verhältnis zwischen Cäsiumatomen und Wolframatomen (Cs: W), die in dem Cäsium-Wolfram-Verbundoxidfilm (108) enthalten sind, 1:2 bis 1:4 wird.

7. Verfahren zum Herstellen eines optischen Films nach einem der Ansprüche 3 bis 6, wobei
die Rückkopplungssteuerung des Sauerstoffpartialdrucks durch einen Impedanzregler durchgeführt wird, der eine Rückkopplungssteuerung einer Impedanzänderung während der Filmbildung durchführt.

8. Verfahren zum Herstellen eines optischen Films nach einem der Ansprüche 3 bis 6, wobei
die Rückkopplungssteuerung des Sauerstoffpartialdrucks durch einen Plasmaemissionsmonitor durchgeführt wird, der eine Emissionsintensität einer spezifischen Wellenlänge während der Filmbildung misst, um die Rückkopplungssteuerung des Sauerstoffpartialdrucks durchzuführen.

## Revendications

1. Film optique formé sur un matériau de base (10, 23, 100, 143) et composé d'un oxyde composite de césium et de tungstène contenant du césium, du tungstène et de l'oxygène,
le film optique étant composé : d'une couche de surface (101) située sur un côté de la surface et dont l'épaisseur est comprise entre 20 nm et 60 nm ; et d'une couche interne (102) située sur une face du matériau de base,
un indice de réfraction n et un coefficient d'extinction k de la couche de surface (101) étant chacun définis dans les plages numériques du tableau 12 ci-dessous
**[Tableau 12]**
| nm | n-min 2.1 | n-max | nm | k-min | k-max |
|---|---|---|---|---|---|
| 300 | 1.9 | 2.6 | 300 | 1.0 | 1.5 |
| 400 | 1.2 | 2.6 | 400 | 0.0 | 0.5 |
| 600 | 0.7 | 1.6 | 600 | 0.1 | 0.5 |
| 800 | 0.5 | 1.2 | 800 | 0.7 | 1.1 |
| 1000 | 0.4 | 1.1 | 1000 | 1.3 | 1.8 |
| 1200 | 0.5 | 1.0 | 1200 | 2.0 | 2.4 |
| 1400 | 0.7 | 1.1 | 1400 | 2.6 | 3.1 |
| 1600 | 1.0 | 1.3 | 1600 | 3.2 | 3.8 |
| 1800 2000 | 1.4 | 1.6 | 1800 | 3.6 | 4.3 |
| 2200 | 1.8 | 1.9 | 2000 | 4.0 | 4.8 |
| 2400 | 2.0 | 2.2 | 2200 | 4.3 | 5.1 |
| | | 2.5 | 2400 | 4.5 | 5.4 |
et
un indice de réfraction n et un coefficient d'extinction k de la couche interne (102) étant chacun définis dans des plages numériques du tableau 13 ci-dessous.
**[Tableau 13]**
| nm | n-min 2.6 | n-max | nm | k-min | k-max |
|---|---|---|---|---|---|
| 300 | 2.1 | 3.2 | 300 | 0.3 | 0.7 |
| 400 | 1.9 | 2.6 | 400 | 0.0 | 0.2 |
| 600 | 1.8 | 2.3 | 600 | 0.0 | 0.2 |
| 800 | 1.7 | 2.1 | 800 | 0.0 | 0.3 |
| 1000 | 1.7 | 2.1 | 1000 | 0.0 | 0.5 |
| 1200 | 1.7 | 2.1 | 1200 | 0.0 | 0.7 |
| 1400 | 1.7 | 2.2 | 1400 | 0.1 | 0.8 |
| 1600 | 1.7 | 2.3 | 1600 | 0.1 | 0.9 |
| 1800 2000 | 1.8 | 2.4 | 1800 | 0.2 | 1.0 |
| 2200 | 1.9 | 2.6 | 2000 | 0.2 | 1.0 |
| 2400 | 1.9 | 2.7 | 2200 | 0.3 | 1.0 |
| | | 2.8 | 2400 | 0.3 | 1.0 |

2. Film optique selon la revendication 1,
dans le film optique ayant une épaisseur de 300 nm à 560 nm, la transmittance moyenne dans une région de longueur d'onde de 400 nm à 550 nm étant de 45 % ou plus, et la réflectance dans une longueur d'onde de 2000 nm étant de 40 % ou plus.

3. Procédé de production d'un film optique selon la revendication 1 ou 2, comprenant :
une étape de formation d'un film consistant à former un film d'oxyde composite de césium et de tungstène (108) dont un indice de réfraction n et un coefficient d'extinction k sont chacun définis dans des plages numériques du tableau 14 ci-dessous sur un matériau de base (10, 23, 100, 143) en utilisant une cible de pulvérisation (2, 11, 12, 13, 14, 25, 26, 27, 28, 104, 111, 112, 113, 114, 125, 126, 127, 128, 145, 146, 147, 148) composée d'atomes de césium, d'atomes de tungstène et d'oxygène, en réalisant une commande par rétroaction d'une pression partielle d'oxygène dans une atmosphère de formation de film de pulvérisation et en commandant une température de chauffage du matériau de base (10, 23, 100, 143),
**[Tableau 14]**
| nm | n-min 2.6 | n-max | nm | k-min | k-max |
|---|---|---|---|---|---|
| 300 | 2.1 | 3.2 | 300 | 0.3 | 0.7 |
| 400 | 1.9 | 2.6 | 400 | 0.0 | 0.2 |
| 600 | 1.8 | 2.3 | 600 | 0.0 | 0.2 |
| 800 | 1.7 | 2.1 | 800 | 0.0 | 0.3 |
| 1000 | 1.7 | 2.1 | 1000 | 0.0 | 0.5 |
| 1200 | 1.7 | 2.1 | 1200 | 0.0 | 0.7 |
| 1400 | 1.7 | 2.2 | 1400 | 0.1 | 0.8 |
| 1600 | 1.7 | 2.3 | 1600 | 0.1 | 0.9 |
| 1800 2000 | 1.8 | 2.4 | 1800 | 0.2 | 1.0 |
| 2200 | 1.9 | 2.6 | 2000 | 0.2 | 1.0 |
| 2400 | 1.9 | 2.7 | 2200 | 0.3 | 1.0 |
| | | 2.8 | 2400 | 0.3 | 1.0 |
et
une étape de recuit consistant à réaliser un traitement de recuit sur le film d'oxyde composite de césium et de tungstène formé (108) pour former une couche de surface (101) dont un indice de réfraction n et un coefficient d'extinction k sont chacun définis dans des plages numériques du tableau 15 ci-dessous sur un côté de la surface du film d'oxyde composite de césium et de tungstène (108), et pour former une couche interne (102) dont un indice de réfraction n et un coefficient d'extinction k sont chacun définis dans les plages numériques du tableau 14 ci-dessus dans une partie du côté du matériau de base du film d'oxyde composite de césium et de tungstène (108), à l'exception de la couche de surface (101).
**[Tableau 15]**
| nm | n-min 2.1 | n-max | nm | k-min | k-max |
|---|---|---|---|---|---|
| 300 | 1.9 | 2.6 | 300 | 1.0 | 1.5 |
| 400 | 1.2 | 2.6 | 400 | 0.0 | 0.5 |
| 600 | 0.7 | 1.6 | 600 | 0.1 | 0.5 |
| 800 | 0.5 | 1.2 | 800 | 0.7 | 1.1 |
| 1000 | 0.4 | 1.1 | 1000 | 1.3 | 1.8 |
| 1200 | 0.5 | 1.0 | 1200 | 2.0 | 2.4 |
| 1400 | 0.7 | 1.1 | 1400 | 2.6 | 3.1 |
| 1600 | 1.0 | 1.3 | 1600 | 3.2 | 3.8 |
| 1800 2000 | 1.4 | 1.6 | 1800 | 3.6 | 4.3 |
| 2200 | 1.8 | 1.9 | 2000 | 4.0 | 4.8 |
| 2400 | 2.0 | 2.2 | 2200 | 4.3 | 5.1 |
| | | 2.5 | 2400 | 4.5 | 5.4 |

4. Procédé de production d'un film optique selon la revendication 3,
l'étape de recuit étant réalisée à une température de 300 °C ou plus sous une atmosphère exempte d'oxygène.

5. Procédé de production d'un film optique selon la revendication 3 ou 4,
un rapport entre les atomes de césium et les atomes de tungstène (Cs:W) de la cible de pulvérisation (2, 11, 12, 13, 14, 25, 26, 27, 28, 104, 111, 112, 113, 114, 125, 126, 127, 128, 145, 146, 147, 148) étant compris entre 1:2 et 1:4.

6. Procédé de production d'un film optique selon la revendication 3 ou 4,
l'étape de formation du film étant réalisée par un procédé de double pulvérisation utilisant une cible de pulvérisation (111, 113, 125, 127, 145, 147) d'une source de césium et une cible de pulvérisation (112, 114, 126, 128, 146, 148) d'une source de tungstène, et réalisant une commande en retour d'une pression partielle d'oxygène d'une atmosphère de formation de film à double pulvérisation et ajustant une puissance électrique à appliquer à une cathode de pulvérisation (106) ou un rapport de service tel qu'un rapport entre les atomes de césium et les atomes de tungstène (Cs : W) contenus dans le film d'oxyde composite de césium et de tungstène (108) devienne entre 1:2 et 1:4.

7. Procédé de production d'un film optique selon l'une quelconque des revendications 3 à 6,
la commande en retour de la pression partielle d'oxygène étant réalisée par un dispositif de commande d'impédance qui réalise une commande en retour d'un changement d'impédance pendant la formation du film.

8. Procédé de production d'un film optique selon l'une quelconque des revendications 3 à 6,
la commande en retour de la pression partielle d'oxygène étant réalisée par un dispositif de surveillance d'émission de plasma qui mesure une intensité d'émission d'une longueur d'onde spécifique pendant la formation du film pour réaliser la commande en retour de la pression partielle d'oxygène.
